# EUROPEAN PATENT SPECIFICATION

(11) **EP 3 398 029 B1**
(45) Date of publication and mention of the grant of the patent: **07.07.2021**
(21) Application number: 16822483.0
(22) Date of filing: 30.12.2016
(51) Int. Cl.: G06F 3/01

(54) **INTELLIGENT SMART ROOM CONTROL SYSTEM**
INTELLIGENTES RAUMÜBERWACHUNGSSYSTEM
SYSTÈME INTELLIGENT DE CONTRÔLE D'UNE PIÈCE

(30) Priority: 31.12.2015 US 201562273620 P
(43) Date of publication of application: 07.11.2018
(73) Proprietor: Robert Bosch GmbH, 70442 Stuttgart (DE)
(72) Inventor: YE, Mao, San Jose California 95134 (US); CHEN, Yen-Lin, San Jose California 95117 (US); REN, Liu, Cupertino California 95014 (US)
(86) International application number: PCT/EP2016/082905
(87) International publication number: WO 2017/114941

(56) References cited:
- US-A1- 2010 182 136
- US-A1- 2014 240 464
- US-A1- 2014 240 464
- US-A1- 2015 074 532
- US-A1- 2015 074 532
- US-A1- 2015 074 532

## Description

### FIELD

The patent relates generally to control systems and, more particularly, to intelligence smart room control system based on three-dimensional sensing.

US 2015/0074532 A1 discloses a computer-implemented method for controlling aspects of a surveillance system using gestures and/or voice commands. This method comprises: receiving one or both of an operator's skeleton input data and voice input data from a gesture detection camera and a microphone; using a processor, matching one or both of the received skeleton input data With a gesture stored in a database and the received voice input data with a text string stored in the database; matching one or both of the gesture and text string to a corresponding video management program command stored on the database; and transmitting the one or more video management program commands to a video management program of the surveillance system.

US 2010/0182136 A1 discloses a method for providing interactive kitchen activity comprising the steps of: providing a projection screen surface; using a computer controlled video image projector, projecting information on said surface; providing a camera or other electro-optical sensor for observing at least one person working in said kitchen; determining using said computer information relating to said person, and; using said information, projecting images of interest to said person.

US 2014/240464 A1 discloses an electronic device including a depth sensor, a first imaging camera, and a controller. The depth sensor includes a modulated light projector to project a modulated light pattern. The first imaging camera is to capture at least a reflection of the modulated light pattern. The controller is to selectively modify at least one of a frequency, an intensity, and a duration of projections of the modulated light pattern by the modulated light projector responsive to at least one trigger event. The trigger event can include a change in ambient light incident on the electronic device, detection of motion of the electronic device, or a determination that the electronic device has encountered a previously-unencountered environment.

### SUMMARY

The invention is set out in the independent claims 1 and 7 with preferred embodiments set out in the dependent claims. A summary of certain embodiments disclosed herein is set forth below. It should be understood that these aspects are presented merely to provide the reader with a brief summary of these certain embodiments and that these aspects are not intended to limit the scope of this invention which is defined in the appended claims.

Embodiments of the disclosure related a room control system include a user interface for displaying at least one of an event, an activity, or a status of an environment, a camera for monitoring at least one of the event, the activity, or the status of an environment, the camera configured to capture a gesture rendered by a person within an interactive area as an input and transmit an information associated with the gesture input, wherein the information is at least one of a control information, a warning information, an acknowledging information, an rejection information, or a respond information. The user interface configured to control an external device such as a home appliance, an entertainment system, a gaming device, a HVAC, a lighting system, and a client device, or a video device. For example, the client device is a phablet, a cellular phone, a tablet, a personal digital assistant (PDA), a laptop, a computer, and a wearable device. The room control system further includes a second camera configured to track a change in biometric position of a person and the user interface configured to display a dynamic angle of view associated to the change in biometric position of the person, wherein the first and second camera are a video camera, an analog camera, a digital video camera, a color camera, a monochrome camera, a camcorder, a PC camera, a webcam, and a CCTV. At least one of a depth sensor or a RGB sensor is integrated into the first and second cameras.

According to another exemplary embodiment of the disclosure, a system comprises a non-transitory computer-readable medium for carrying or having computer-executable instructions to monitor at least one of an event, an activity, or a status of an environment, the instructions causing a machine to modulate at least one beam with electronic image information based on the at least one of the event, activity, or the status of the environment and display the at least one beam with the electronic image information into a visualization image. The instructions to display the visualization image comprising weather information, time and data information, utility usage and costs, traffic information, electronic mail message information, meeting schedule information, incoming call information, and contact list information. The non-transitory computer-readable medium for carrying or having computer-executable instructions to monitor at least one of the event, the activity, or the status of an environment further comprises instructions for capturing a gesture rendered by a person within an interactive area as an input and transmitting an information associated with the gesture input, wherein wherein the information is at least one of a control information, a warning information, an acknowledging information, an rejection information, or a respond information. The instructions to display further comprises tracking a change in biometric position of a person and displaying a dynamic angle of view associated to the change in biometric position of the person.

According to another exemplary embodiment of the disclosure, a system and method are provided for displaying information of an event, an activity, or a status of an environment. For example, a room control system includes a sensing device or a camera, a projector, a communication link communicatively coupled the camera and the projector. One or more computing devices, home appliances, HVAC, and lighting systems may be linked to at least one of the sensing device and projector via one or more communication links where tasks are performed by at least one of the computing device, the sensing device, or projector that are linked over a network through one or more servers.

According to another exemplary embodiment of the disclosure, the room control system is configured to control and monitor one or more of the home appliances, HVAC, and lighting systems and display an event, an activity, or a status of one or more of the home appliances, HVAC, and lighting systems

### BRIEF DESCRIPTION OF THE DRAWINGS

These and other features, aspects, and advantages of this disclosure will become better understood when the following detailed description of certain exemplary embodiments is read with reference to the accompanying drawings in which like characters represent like arts throughout the drawings, wherein:
FIG. 1 is a diagram representing of an environment having a room control system using three-dimensional (3D) sensing, in accordance with a described embodiment;
FIG. 2 is a diagram representing of another environment having a room control system detecting an event, in accordance with the described embodiment;
FIG. 3 is a block diagram illustrating a room control system in accordance to a described embodiment of a disclosure; and
FIGs. 4A-4D are various perspective of a user view visualization in accordance to a described disclosure.

### DETAILED DESCRIPTION

One or more specific embodiments will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such development effort might be complex and time consuming, but would nevertheless be a routine undertaking of design, fabrication, and manufacture for those of ordinary skill having the benefit of this disclosure.

The following description is presented to enable any person skilled in the art to make and use the described embodiments, and is provided in the context of a particular application and its requirements. It is apparent to those skilled in the art, that the scope of the invention is defined in the appended claims.

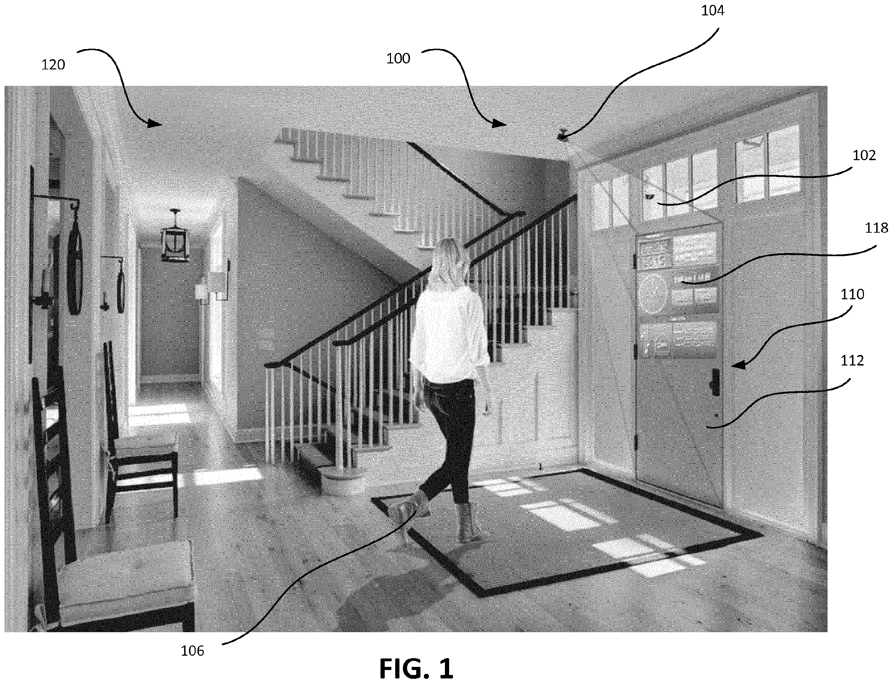

FIG. 1 depicts a room control system 100 in an environment 120 according to an exemplary embodiment of a patent. The environment 120 may be, for example, a room, a building, an open space, a closed space, and the like. As illustrated, the environment is a foyer or entryway connected to other room (such as kitchen, living, and the like). The room control system 100 includes a camera or an imaging sensing device 102, a projector 104, and a graphical user interface 110. The camera 102 and the projector 104 may be either mounted to, disposed on, or integrated into any object/surface. The camera 102 may be located anywhere. In one embodiment, the camera 102 is located in front of the entryway. In another embodiment, the camera 102 is located behind the entryway which may be outside the room. The projector 104 and the graphical user interface 110 may be located in anywhere too. However, the location of the projector 104 and the graphical user interface 100 may be different from the location of the camera 102. As an example, the projector 104 and the graphical user interface 110 are located somewhere in the entryway whereas the camera 102 is located outside the entryway or in a different space. In another example, all the camera 102, the projector 104, the graphic user interface 110 are located in the space. At least one wireless link coupled the camera 102 to the projector 104 and the graphical user interface 110. The wireless communication may be for example, cellular protocol, radio frequency, internet protocol, or like. Alternatively, at least one of the camera 102 and the projector 104 may be wired to other home system.

As depicted in FIG. 1, the camera 102 is mounted either outside the entryway or behind the graphical user interface 110 for monitoring at least one of an event, an activity, or a status of the environment. More than one camera 102 may be communicatively coupled to the projector 104 for monitoring or surveilling at least one of the event, the activity, or the status of the environment, depending on the applications. More than one projector 104 may be communicatively coupled to at least one camera 102 and the graphical user interface 110, depending on the application. The room control system 100 may be wirelessly coupled to a computing device. The computing device may have additional features or functionality, and additional interfaces to facilitate communications between the room control system 100 and any desired devices and interfaces. The computing device may include servers, client devices or electronic devices, and comparable devices. The electronic device may be for example, a cellular phone, a tablet, a Personal digital assistant (PDA), a laptop, a computer, a portable audio device, a gaming device, a wearable device, a video device, or the like.

As further illustrated in FIG. 1, as an example, as a person 106 walks toward or approaches an interactive area, a sensing device detects the person 106. The detected signal is then transmitted by the sensing device via a communication link to the projector 104. The projector 104 receives the detected signal, processes the detected signal, modulates at least one beam with electronic image information, forms the at least one beam with electronic image information into an image or a visualization display 118, and displays the image or visualization display 118 on the graphical user interface 110 for interaction. The image or visualization display includes, but not limited to, weather information, time and date information, utility usage and costs, calendar, traffic information, electronic mail message information, meeting schedule information, incoming call information, and so forth. Once the person 106 is within the interactive area, any body gesture rendered by the person 106 is captured and tracked by the camera 102 or another sensing device as inputs of at least one of the event, the activity, or the status of the environment, for operation. For example, if the person 106 points to at least one area of the image or visualization display 118 that indicates the electronic mail message information, the gesture input is captured and transmitted to the projector 106 for operation which may be open the electronic mail message, read content of the message, and either respond to the message, save the message for later action, or delete/remove the message. In one embodiment, the sensing device may be integrated into the projector 106. In alternate embodiment, the sensing device may be integrated into the camera 102. In yet another embodiment, the sensing device may be a stand-alone device and may communicatively couple to at least one of the projector 106 and the camera 102. Still in another embodiment, the camera 102 may be integrated into the projector 106.

As another example, as the person 106 walks toward or approaches an interactive area, the camera 102 detects the person 106. The detected signal, in the form of imaging signal, is then transmitted via a communication link to the projector 104. The projector 104 receives the detected signal, processes the detected signal, modulates at least one beam with electronic image information, forms the at least one beam with electronic image information into an image or a visualization display 118, and displays the image or the visualization display 118 on the graphical user interface 110, for interaction. The image includes, but not limited to, weather information, time and date information, utility usage and costs, calendar, traffic information, electronic mail message information, meeting schedule information, incoming call information, and so forth. Once the person 106 is within the interactive area, anybody gesture rendered by the person 106 is captured and tracked by the camera 102 as inputs of at least one of the event, the activity, or the status of the environment, for operation. For example, if the person 106 points to at least one area of the image 118 that indicates the electronic mail message information, the input is captured and transmitted to the projector 106 for operation which may be open the electronic mail message, read content of the message, and either respond to the message, save the message for later action, or delete/remove the message. In one embodiment, the camera that detects the person approaching the interactive area may not be the same camera that captures and tracks the body gestures rendered by the person 106. As an example, the first camera that detects the person approaching the interactive area may be located behind the graphical user interface 110 while the second camera for capturing and tracking the body gesture may be located in front of the graphical user interface 110. As illustrated in FIG. 1, the interactive image 110 is displayed on a door 112. In alternate embodiment, the interactive image 110 may be displayed on any surface or object within the interactive area.

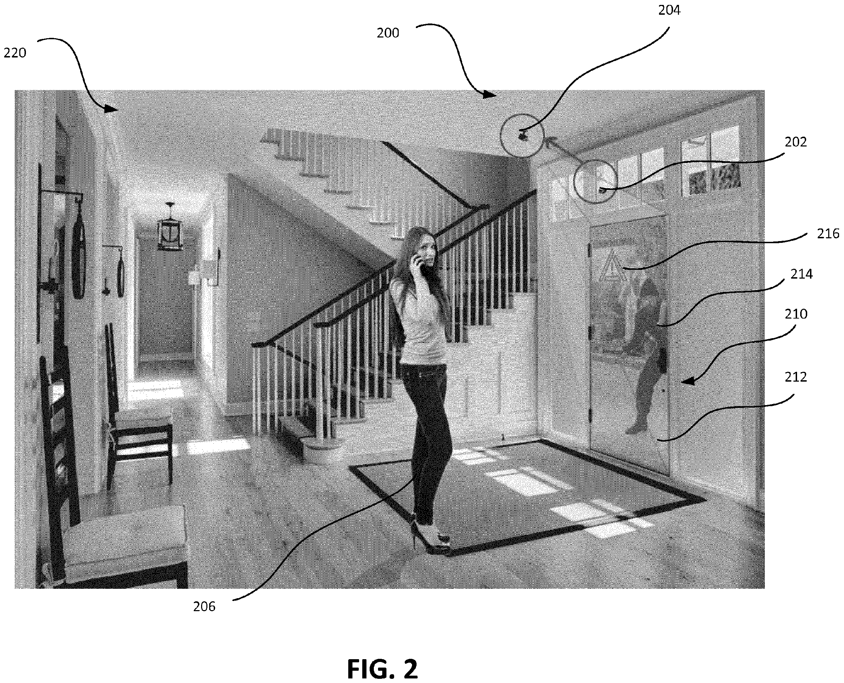

FIG. 2 depicts another described embodiment of a room control system 200 in an environment 220. FIG. 2 is similar in construction to the room control system 100 in FIG. 1 and like elements are identified with a like reference convention wherein, for example, element 100 corresponds to element 200. The environment 220 may be, for example, a room, a building, an open space, a closed space, a commonplace, a site, and the like. As illustrated, the environment is a foyer or entryway connected to other room (such as kitchen, living, and the like). The room control system 200 includes a camera or an imaging sensing device 202, a projector 204, and a graphical user interface 210. The camera 202 and the projector 204 may be either mounted to, disposed on, or integrated into any object/surface. The camera 202 may be located anywhere. In one embodiment, the camera 202 is located in front of the entryway. In another embodiment, the camera 202 is located behind the entryway which may be outside the room. The projector 204 and the graphical user interface 210 may be located in anywhere too. However, the location of the projector 204 and the graphical user interface 100 may be different from the location of the camera 202. As an example, the projector 204 and the graphical user interface 210 are located somewhere in the entryway whereas the camera 202 is located outside the entryway or in a different space. In another example, all the camera 202, the projector 204, the graphic user interface 210 are located in the space. At least one wireless links coupled the camera to the projector 204 and the graphical user interface 210. The wireless communication may be for example, cellular protocol, radio frequency, internet protocol, or like. Alternatively, at least one of the camera 202 and the projector 204 may be wired to other home system.

The camera or sensing device may be a video camera, an analog camera, digital video camera, a color camera, a monochrome camera, a camcorder, a PC camera, a webcam, an infrared (IR) video camera, a CCTV camera, a depth camera, a Red Green Blue - Depth (RGB-D) camera and the like. To compute the distance of an object such as a person 214 from the camera or sensing device, at least a pair of stereo cameras, one or more stereo cameras in a network, or one or more depth cameras 202 may be used. A processor either integrated into the camera or communicatively coupled to the camera measures the distance or depth information, modulates at least one beam with electronic image information including depth information, forms the at least one beam with electronic image information into an image or the visualization display 212, and displays/projects the image or visualization display 212 based on a person 206 perspective.

As depicted in FIG. 2, the camera 202 is mounted either outside the entryway or behind the graphical user interface 210 for monitoring at least one of an event, an activity, or a status of the environment. More than one camera 202 may be communicatively coupled to the projector 204 for monitoring at least one of the event, the activity, or the status of the environment, depending on the applications. More than one projector 204 may be communicatively coupled to at least one camera 102 and the graphical user interface 210, depending on the application. The room control system 200 may be wirelessly coupled to a computing device. The computing device may have additional features or functionality, and additional interfaces to facilitate communications between the room control system 200 and any desired devices and interfaces. The computing device may include servers, client devices or electronic devices, and comparable devices. The electronic device may be for example, a cellular phone, a tablet, a Personal digital assistant (PDA), a laptop, a computer, a portable audio device, a gaming device, a video device, a wearable device, or the like.

As further illustrated in FIG. 2, as an example, as an unidentified person 214 walks toward or approaches an interactive area, a sensing device detects the unidentified person 214. The detected signal is then transmitted by the sensing device via a communication link to a processor or the projector 204. The processor may be located remotely and connected to a room control system either via a wireless or wire connection. In some embodiments, the processor formed as part of at least one of the computing devices, home appliances, security systems, lighting control systems, and the like. The projector 204 receives the detected signal, processes the detected signal, and displays the processed signal in a form of an image 212 that is not visible to the unidentified person 214 on the graphical user interface 210. The image includes, but not limited to, person identification, time and date information, statuses of the environment, and so forth. Other information such as warning information and the like may also be display on the image to alert the person inside the house, such as a homeowner. As illustrated in FIG. 2, the image of the unidentified person 214 with a warning information 216 are displayed as an image 212 to alert a person 206 inside the house, identified as homeowner for example, of the at least one of the event, activity, and status of the environment. The person 206 can report an unusual event, activity, or status to at least one of a law enforcer, a security company, and the like. In another example, the room control system can report the unusual event, activity, or status to at least one of a law enforcer, a security company, and the like, via a network. The room control system 200 may return to monitoring mode once the earlier unusual event, activity, or status is resolved. Without exposing the safety of the homeowner 206 by opening the door, the interactive image 212 displayed by the room control system provides to the homeowner 206 standing in front of the interactive image 212 the information to the event, activity, or status of the environment. In one embodiment, the room control system 200 may be triggered to track and capture the event, activity, or the status when a door bell communicatively coupled to the room control system 200 is pressed or activated. In alternate embodiment, the room control system 200 may be triggered to track and capture the event, activity, or the status via a computing device over a network. In yet another embodiment, the room control system 200 may be triggered to track and capture the event, activity, or the status via any user command which may be gesture or voice command.

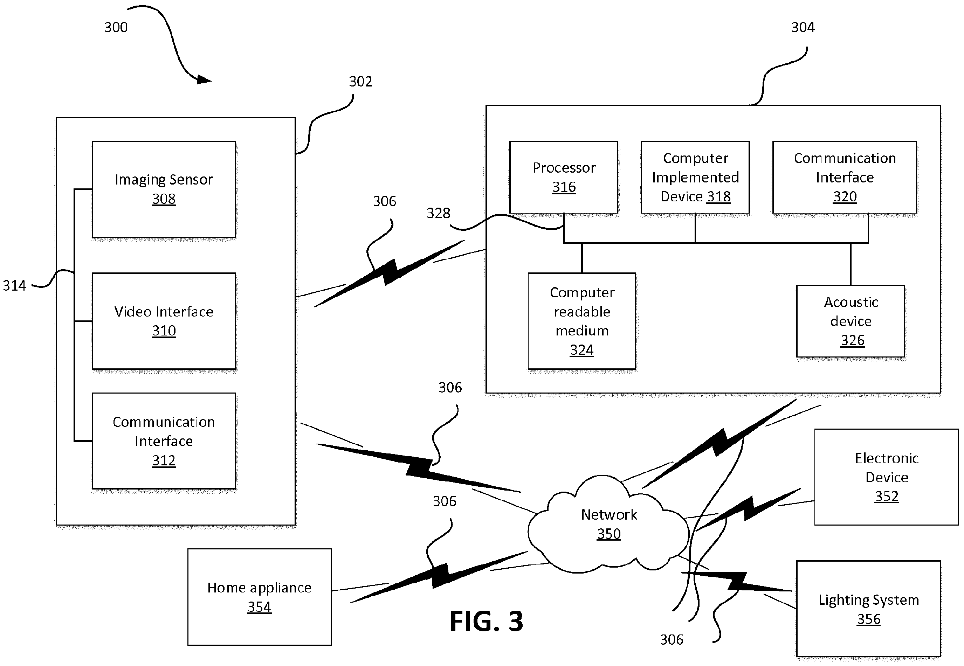

FIG. 3 illustrates a room control system 300 of an exemplary embodiment of a disclosure. The system 300 includes a sensing device or a camera 302, a projector 304, a communication link 306 communicatively coupled the camera 302 and the projector 304. One or both the camera 302 and the projector 304 may be communicatively coupled to a computing device 352 via a network 350. The camera 302 may be a video camera, an analog camera, digital video camera, a color camera, a monochrome camera, a camcorder, a PC camera, a webcam, an infrared (IR) video camera, a CCTV camera, a stereo camera, a depth camera, a RGB-D camera, and the like. More than one camera may be used, depending on the application. The communication link 306 may be a wireless link, a wired link, or combination thereof. The wireless communication may be for example, cellular protocol, radio frequency, internet protocol, or like. The wired link may be a Local Area Network (LAN), Wide Area Network (WAN), or the like.

The camera 302 includes an imaging sensor 308, a video interface 310, and a communication interface 312 communicatively coupled to the sensor 308 and the interface 310 via one or more interface buses 314. Other computer implemented devices such as a communication readable medium, a processor, a transducer (microphone and/or speaker) for performing other features not defined herein may be incorporated into the camera 302. The projector 304 includes a processor 316, a computer implemented device such as input/output interface 318, a communication interface 320, a computer readable medium 324, and an acoustic device 326. These various computer implemented devices 316, 318, 320, 324, 326 are communicatively coupled to each other by one or more interface buses 328. Other computer implemented devices or performing certain features not defined herein may be incorporated into the projector 304. Depending on the desired configuration, the processor 316 may be of any type, including but not limited to a microprocessor, a microcontroller, a digital signal processor, or any combination thereof. The processor 316 may include one or more levels of caching, such as a level cache memory, one or more processor cores, and registers. The communication readable medium 324 may be of any type including but not limited to volatile memory such as RAM, nonvolatile memory such as ROM, removable media, non-removable media, or any combination thereof, implemented in any method or technology for storage of information, such as computer readable instructions, data structures, program modules, or other data. Acoustic device 326 may be a microphone, speaker, or combination thereof for capturing the surround sound and facilitates control of other interface computer implemented devices or other external computer implemented devices.

The computing device 352 may be a personal computer or desktop computer, a laptop, a cellular or smart phone, a tablet, a personal digital assistant (PDA), a gaming console, an audio device, a video device, an entertainment device such as a television, a vehicle infotainment, or the like. One or more computing devices 352 may be linked to at least one of the sensing device 300 and projector 304 via one or more communication links 306 where tasks are performed by at least one of the computing device 352, the sensing device 300, or projector 304 that are linked over the network 350 through one or more servers. The computing device 352 can in some embodiment be referred to as a single client machine or a single group of client machines, while the server may be referred to as a. single server or a single group of servers. In one embodiment a single computing device 352 communicates with more than one server, while in another embodiment a single server communicates with more than one computing device 352. In yet another embodiment, a single computing device 352 communicates with a single server. The server may be an application server, a certificate server, a mobile information server, an e-commerce server, a FTP server, a directory server, CMS server, a printer server, a management server, a mail server, a public/private access server, a real-time communication server, a database server, a proxy server, a streaming media server, or the like. In some embodiment, a cloud computing device may be implemented as one or more servers which may be communicated with via the Internet, and which may be co-located or geographically distributed, wherein shared resources, software, and information are provided to computers and other devices on demand for example, as will be appreciated by those skilled in the art.

The network 350 can comprise one or more sub-networks, and can be installed between any combination of the computing devices 352, the server, computing machines and appliances included within the room control system 300. In some embodiments, the network 350 can be for example a local-area network (LAN), a metropolitan area network (MAN), a wide area network (WAN), a primary network 104 comprised of multiple sub-networks located between the computing device 352 and the server, a primary public network with a private sub-network, a primary private network with a public sub-network, or a primary private network with a private sub-network. Still further embodiments include a network 350 that can be any network types such as a point to point network, a broadcast network, a telecommunication network, a data communication network, a computer network, an ATM (Asynchronous Transfer Mode) network, a SONET (Synchronous Optical Network) network, a SDH (Synchronous Digital Hierarchy) network, a wireless network, a wireline network, and the like. Depending on the application, other networks may be used so that data exchanged between the computing device and the server can be transmitted over the network. Network topology of the network 350 can differ within different embodiments which may include a. bus network topology, a star network topology, a ring network topology, a repeater-based network topology, or a tiered-star network topology. Additional embodiments may include a network of mobile telephone networks that use a protocol to communicate among mobile devices, where the protocol can be for example AMPS, TDMA, CDMA, GSM, GPRS, UMTS, LTE or any other protocol able to transmit data among mobile devices.

The communication interface 320 allows software and data to be transferred between the computer system and other external electronic devices in the form of signals which may be, for example, electronic, electromagnetic, optical, or other signals capable of being received by the communication interface 320. The communication interface 320 may be for example a modem, a network interface, a communication port, a PCM-CIA slot and card, or the like. The computer implemented device 318 incorporated in the projector 304 may include a video adapter, a digitizer, a printer, a gesture recognition module, a camera, and the like. The camera 318 detects user's viewing location and direction to assist the visualization and enable user interactions when then image is displayed on the graphical user interface 110, as depicted in FIGs. 1 and 2. More detail information to the room control system 300 will be discussed below.

Through the communication links 306, the system 300 is capable of communicating with the electronic devices 352, home appliances 354, and the like, to enable more functionalities such as room temperature, personal email notification, visitor identification, and so forth.

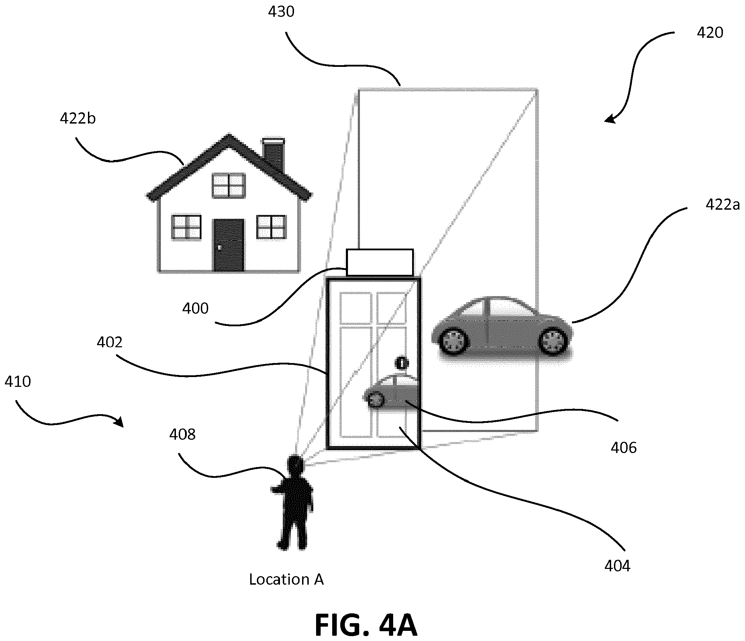

Now referring to FIGs. 4A-4D illustrating various perspective views of a user view visualization according to a described disclosure. A room control system 400 is mounted over an object 402. In some embodiments, the system 400 may be disposed on or integrated into any objects. The object may be a door, a window, a wall, a ceiling, a floor, a mirror, a lighting fixtures, or any objects available in a site. The site includes a commonplace, a room, a hallway, an entryway, and so forth. As illustrated, the object 402 is a door located in a room. The room control system 400 includes an indoor camera or a sensing device and a projector. For simplicity, only the room control system 400 is illustrated. A graphical user interface 404 is implemented on the door 402 for monitoring and displaying at least one of an event, an activity, or a status of an environment 406. The event, the activity, or the status of the environment may be captured or detected by an outdoor camera (as shown in FIGs. 1 and 2) mounted behind the door 402. In other word, outdoor scene or event can be displayed on the graphical user interface 404 with different spatial assessments of visualization systems to allow different levels of immersive experience to the user 408. A person 408 stands in front of the door 402 located in an indoor environment 410 with a view of an outdoor environment 420 via the graphical user interface 404. The view of the outdoor environment varies depending on the user's viewing location and direction detected by the room control system 400. To provide at least one of the changing or dynamic views of the scene, the scene is captured and reconstructed/reconfigured into three dimensional (3D) with a certain level of quality. To capture a 3D information, a plurality of outdoor camera is used. The outdoor camera may be a 2D sensor, a color camera (e.g. RGB-D camera), an IR camera, a depth sensor, and the like. To display a color image on the graphical user interface 404, at least one RGB-D sensor or camera is used to capture the scene in color. The room control system 400 includes an image filtering module communicatively coupled to a network. The module may be implemented in one of the sensing device, the projector, or combination thereof. In some embodiments, the module is a separate device and is remotely connected to one of the sensing device and the projector. The imaging filtering module may be Gaussian filtering module, a Bilateral filtering module, a guided image filtering module, and combination. After an image is captured by one of the sensing device or the camera, the captured image is transmitted to the image filtering module for filtering or removing any unwanted noises, such as blur, roughness, and any noise elements found on the image.

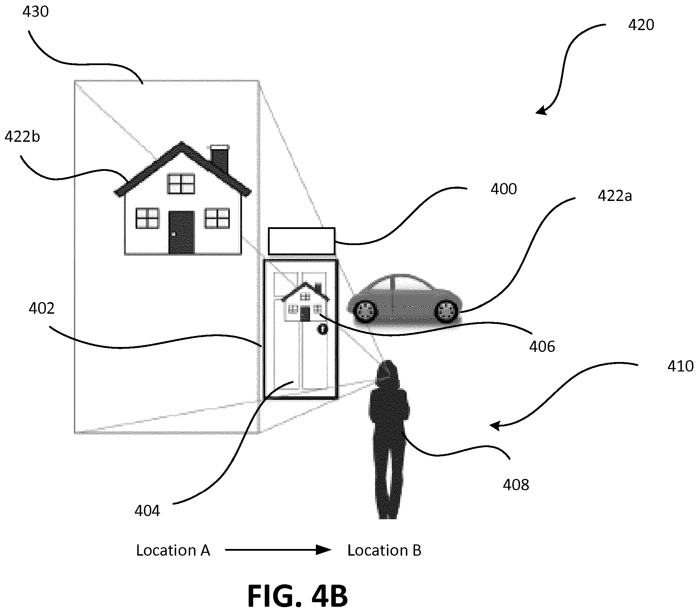

As depicted in FIGs. 4A-4D, two targets 422a, 422b are identified in an outdoor environment 420. The targets may be a vehicle 422a, a near-by house or apartment 422b, or the like. Other targets may be found in the outdoor environment, but for simplicity, only two targets are illustrated. The system 400 detects user's viewing location and direction, and gesture interaction, and displays information on the door 402 through the graphical user interface 404. User's viewing location and direction includes user body location, user body height, user head position, user eye gaze direction, user emotion, user personal preference, and the like. Gesture interaction includes hand gestures, body gestures, voices, facial expressions, and the like. For example, as illustrated in FIG. 4A, system 400 detects the head position of the user 408 in a direction towards the target 422a, i.e. a vehicle. The system 400 determines the coordinate based on the head position of the user and display the vehicle 422a in the outdoor environment 420 with a wide angle of view 430. The system 400 also tracks the head position of the user and any change of head position is detected and display a dynamic view of angle of view 430 on the graphical user interface 404 associating with the head position. In some embodiments, if the user 408 move from one location to another location in front of the system 400, the system 400 tracks the change of location and display different angle of view 430 in real-time to accommodate the change without scarifying the angle of view. As illustrated in FIG. 4B, the user 408 has moved from location A as depicted in FIG. 4A to new location B. The angle of view 430 due to a change of location also changes. A house 422b is displayed on the door 402 through the graphical user interface 404 as image 406.

In one example, the indoor sensor delivers the RGBD information of the indoor scene to the processor. The processor determines whether there is a user in the scene, for example using either a detection module. The detection module may be a 2D based human detection module, a 3D base human detection module, a 2D base face detection module, a 3D base head detection module. For initial set up, head position, orientation, or combination thereof of a person is detected by the indoor camera of the system 400. The head position, orientation, or combination thereof, for example, in a formed of data is transmitted to a coordinate module which then is converted into visualization parameters. The coordinate module may be integrated into the system 400. In some embodiments, the coordinate module may be integrated into one of the indoor camera, a processor, a projector. In another embodiment, the coordinate nodule as a separate device may be communicatively coupled to the system 400. Once a head pose is identified by viewing at an angle 430, the system 400 perform tracking using the visualization parameters and display the image 406 through the graphical user interface 404 based on the angle of view 430.

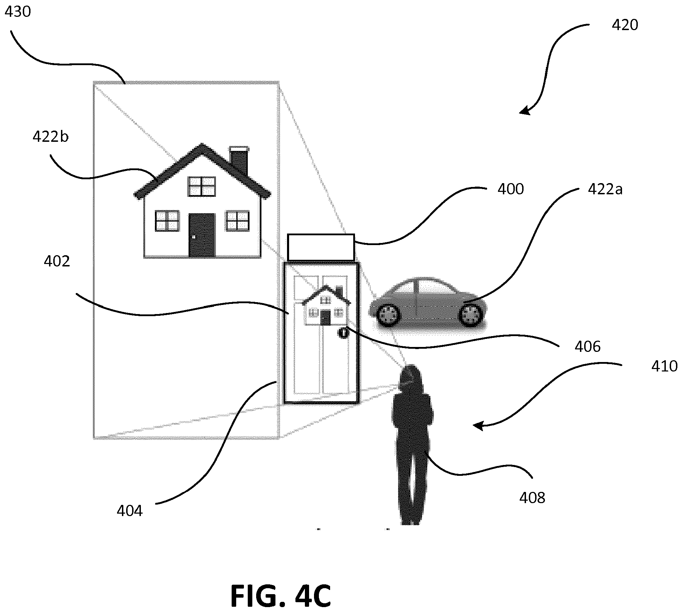

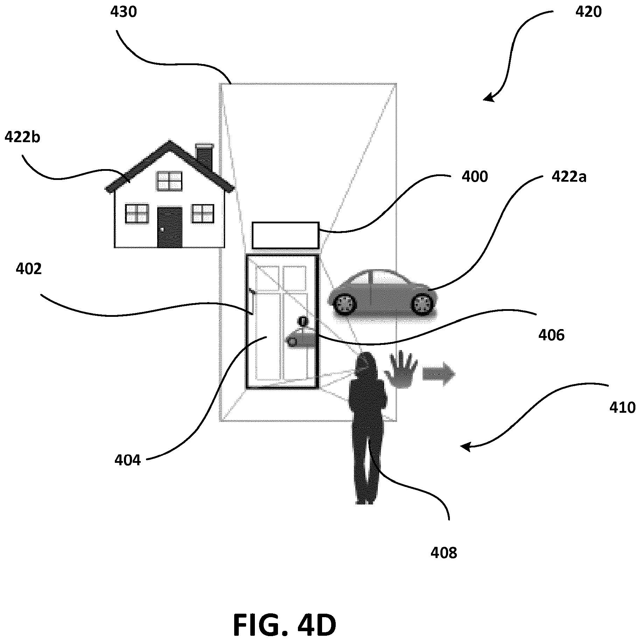

Now referring to FIGs. 4C and 4D, the system 400 detects user hand gestures as a control command to determine an angle of view 430. A visualization coordinate can be defined by the system 400 using a coordinate module. As the user 408 triggers a control and moves his/her hand, for example the hand moves to either left right, the system 400 determines a direction of the hand movement, maps the gesture input to a change of the visualization coordinate, and displays the vehicle 422a as an image 406 on the door 402 through the graphical user interface 404.

If multiple depth sensors are used, more complete 3D model can be reconstructed using various algorithms programed or stored in the system 400 or the coordinate module. One example algorithm will be using volumetric-based representation to fuse the depth data from multiple calibrated sensors. In this example, a 3D volume, for example 3D distance field, is used to represent the scene and can be initialized with depth map of one depth sensor. The coordinate system, also referred as a world coordinate system, can be either borrowed from the camera used for initialization, or another one with known relative position and orientation with respect to this camera. The volume can be updated according to the data of the rest of depth sensors, which is firstly transformed to the world coordinate system via parameters from calibration done beforehand. The update can be performed either sequentially or simultaneously, via volumetric fusion techniques. Color information should also be recorded in the meantime. In the example of point or mesh representation, a texture image can be reconstructed. Alternatively, if a volumetric field is used, a single color or a color distribution for each voxel can be recorded.

Now return to the example as discussed in FIG. 1, as a person 106 walks toward or approaches an interactive area, a sensing sensor 308 of FIG. 3 detects the person 106. The interface buses 314 facilitates the communication between the sensing sensor 308 and the communication interface 312 of the detected signal is then transmitted the detected signal to the project 304 via a communication link 306. The processor 316 of the projector 304 via the communication interface 320 receives the detected signal, processes the detected signal, modulates at least one beam with electronic image information, forms the at least one beam with electronic image information into an image or a visualization display 118, and displays the image or visualization display 118 on the graphical user interface 110 for interaction as illustrated in FIG.1. The detected signal may be optionally stored or saved in the computer readable medium 324 to be processed at a later period. The image or visualization display includes, but not limited to, weather information, time and date information, utility usage and costs, calendar, traffic information, electronic mail message information, meeting schedule information, incoming call information, and so forth. Once the person 106 is within the interactive area, anybody gesture rendered by the person 106 is captured and tracked by one of the sensing sensor 308 or the video interface 310 as inputs of at least one of the event, the activity, or the status of the environment, for operation. For example, if the person 106 points to at least one area of the image or visualization display 118 that indicates the electronic mail message information, the input is captured and transmitted to the projector 304 for operation which may be open the electronic mail message, read content of the message, and either respond to the message, save the message for later action, or delete/remove the message.

As another example as illustrated in FIG. 2, an unidentified person 214 walks toward or approaches an interactive area, a sensing sensor 308 detects the unidentified person 214. The detected signal is then transmitted by the sensing sensor 308 which may be communicatively interfaced with the communication interface 312 via the buses 314, transmits the detected signal to the projector 304 via a communication link 306. The processor 316 receives the detected signal, processes the detected signal, modulates at least one beam with electronic image information, forms the at least one beam with electronic image information into an image or a visualization display, and displays the image or visualization display that is not visible to the unidentified person 214 on the graphical user interface 210. The image includes, but not limited to, weather information, time and date information, utility usage and costs, calendar, traffic information, electronic mail message information, meeting schedule information, incoming call information, an event, an activity, a status of the environment, and so forth. Other information such as warning information and the like may also be display on the image. As illustrated in FIG. 2, the image of the unidentified person 214 with a warning information 216 are displayed as an image 212 to alert a person 206 inside the house, identified as homeowner for example, of the at least one of the event, activity, and status of the environment. The person 206 can report an unusual event, activity, or status to at least one of a law enforcer, a security company, and the like. In another example, the room control system can report the unusual event, activity, or status to at least one of a law enforcer, a security company, and the like, via a network. The room control system 300 may return to monitoring mode once the earlier unusual event, activity, or status is resolved. Without exposing the safety of the homeowner 206 by opening the door, the interactive image 212 displayed by the room control system provides to the homeowner 206 standing in front of the interactive image 212 the information to the event, activity, or status of the environment. In one embodiment, the room control system 300 may be triggered to track and capture the event, activity, or the status when a door bell communicatively coupled to the room control system 300 is pressed or activated. In alternate embodiment, the room control system 300 may be triggered to track and capture the event, activity, or the status via a computing device over a network. In yet another embodiment, the room control system 300 may be triggered to track and capture the event, activity, or the status via any user command which may be gesture or voice command.

While the room control systems 100, 200, 300, 400 provide interface to view information or configure a security system, the systems are configured to facilitate communication and control of at least one of the home appliances, HVAC system, lighting system, and so forth available in a site. In one example, while the user approaches the door for leaving, the system shows alerts that the oven light is turn on. The user can activate a camera installed in the kitchen to display an event or status in the kitchen and then turn off the power to the oven.

The embodiments described above have been shown by way of example, and it should be understood that the scope of the invention is set out in the appended claims.

Embodiments within the scope of the disclosure may also include non-transitory computer-readable storage media or machine-readable medium for carrying or having computer-executable instructions or data structures stored thereon. Such non-transitory computer-readable storage media or machine-readable medium may be any available media that can be accessed by a general purpose or special purpose computer. By way of example, and not limitation, such non-transitory computer-readable storage media or machine-readable medium can comprise RAM, ROM, EEPROM, CD-ROM or other optical disk storage, magnetic disk storage or other magnetic storage devices, or any other medium which can be used to carry or store desired program code means in the form of computer-executable instructions or data structures. Combinations of the above should also be included within the scope of the non-transitory computer-readable storage media or machine-readable medium.

Embodiments may also be practiced in distributed computing environments where tasks are performed by local and remote processing devices that are linked (either by hardwired links, wireless links, or by a combination thereof) through a communications network.

Computer-executable instructions include, for example, instructions and data which cause a general purpose computer, special purpose computer, or special purpose processing device to perform a certain function or group of functions. Computer-executable instructions also include program modules that are executed by computers in stand-alone or network environments. Generally, program modules include routines, programs, objects, components, and data structures, etc. that perform particular tasks or implement particular abstract data types. Computer-executable instructions, associated data structures, and program modules represent examples of the program code means for executing steps of the methods disclosed herein. The particular sequence of such executable instructions or associated data structures represents examples of corresponding acts for implementing the functions described in such steps.

While the patent has been described with reference to various embodiments, it will be understood that the scope of the invention is defined in the claims that follow.

## Claims

1. A room control system (100, 200, 300, 400) comprising:
a user interface (110, 210, 404) for displaying at least one of an event, an activity, or a status of an environment;
a camera (102, 202, 302) for monitoring at least one of the event, the activity, or the status of an environment, the camera (102, 202, 302) configured to:
capture a gesture rendered by a person (106, 206, 408) within an interactive area as an input; and
transmit an information associated with the gesture input; **characterised in that**:
the information is at least a control information for determining an angle of view,
wherein the room control system (100, 200, 300, 400) further comprises a second camera configured to track a change in biometric position of a person and the user interface is configured to display a dynamic angle of view associated to the change in biometric position of the person,
wherein the room control system (100, 200, 300, 400) further comprises a coordinate module configured to define a visualization coordinate, and
wherein the room control system (100, 200, 300, 400) is configured to determine
a moving direction of the gesture, map the gesture input to a change of the visualization coordinate, and display an image through the graphical user interface (110, 210, 404) based on the determined angle of view.

2. The room control system of claim 1 wherein the user interface is adapted to control an external device.

3. The room control system of claim 2 wherein the external device is one of a home appliance, an entertainment system, a gaming device, a HVAC, a lighting system, a client device, and a video device.

4. The room control system of claim 3 wherein the client device is one of a phablet, a cellular phone, a tablet, a personal digital assistant, PDA, a laptop, a computer, and a wearable device.

5. The room control system of claim 1 wherein the first and second cameras are one of a video camera, an analog camera, a digital video camera, a color camera, a monochrome camera, a camcorder, a PC camera, a webcam, and a CCTV.

6. The room control system of claim 5 wherein the cameras comprise at least one of a depth sensor or a RGB sensor.

7. A non-transitory computer-readable medium comprising computer-executable instructions to monitor at least one of an event, an activity, or a status of an environment, the instructions causing a machine to:
modulate at least one beam with electronic image information based on the at least one of the event, activity, or the status of the environment;
display the at least one beam with the electronic image information into a visualization image,
capture a gesture rendered by a person (106, 206, 408) within an interactive area as an input, **characterised by** further causing the machine to:
transmit an information associated with the gesture input as at least a control information for determining an angle of view,
define a visualization coordinate,
determine a moving direction of the gesture,
map the gesture input to a change of the visualization coordinate, and
display an image based on the determined angle of view,
wherein the instructions to display further comprise:
tracking a change in biometric position of a person; and
displaying a dynamic angle of view associated to the change in biometric position of the person.

8. The non-transitory computer-readable medium of claim 7 wherein the instructions to display the visualization image comprise at least one of weather information, time and data information, utility usage and costs, traffic information, electronic mail message information, meeting schedule information, incoming call information, and contact list information.

## Patentansprüche

1. Raumsteuerungssystem (100, 200, 300, 400), umfassend:
eine Benutzerschnittstelle (110, 210, 404) zum Anzeigen von einem Ereignis und/oder einer Aktivität und/oder einem Status einer Umgebung;
eine Kamera (102, 202, 302) zum Überwachen des Ereignisses und/oder der Aktivität und/oder des Status einer Umgebung, wobei die Kamera (102, 202, 302) dazu ausgelegt ist:
eine Geste, die von einer Person (106, 206, 408) innerhalb eines interaktiven Bereichs ausgeführt wird, als Eingabe zu erfassen; und
eine der Gesteneingabe zugeordnete Information zu übertragen;
**dadurch gekennzeichnet dass**:
die Information mindestens eine Steuerinformation zum Bestimmen eines Blickwinkels ist,
wobei das Raumsteuerungssystem (100, 200, 300, 400) ferner eine zweite Kamera umfasst, die dazu ausgelegt ist, eine Veränderung der biometrischen Position einer Person zu verfolgen, und die Benutzerschnittstelle dazu ausgelegt ist, einen dynamischen Blickwinkel anzuzeigen, der der Veränderung der biometrischen Position der Person zugeordnet ist,
wobei das Raumsteuerungssystem (100, 200, 300, 400) ferner ein Koordinatenmodul umfasst, das dazu ausgelegt ist, eine Visualisierungskoordinate zu definieren, und wobei das Raumsteuerungssystem (100, 200, 300, 400) dazu ausgelegt ist, eine Bewegungsrichtung der Geste zu bestimmen, die Gesteneingabe auf eine Veränderung der Visualisierungskoordinate zu mappen und ein Bild durch die grafische Benutzerschnittstelle (110, 210, 404) basierend auf dem bestimmten Blickwinkel anzuzeigen.

2. Raumsteuerungssystem nach Anspruch 1, wobei die Benutzerschnittstelle zum Steuern einer externen Vorrichtung angepasst ist.

3. Raumsteuerungssystem nach Anspruch 2, wobei die externe Vorrichtung ein Haushaltsgerät und/oder ein Unterhaltungssystem und/oder ein Spielgerät und/oder ein HVAC-System und/oder ein Beleuchtungssystem und/oder ein Client-Gerät und/oder ein Videogerät ist.

4. Raumsteuerungssystem nach Anspruch 3, wobei das Client-Gerät ein Phablet oder ein Mobiltelefon oder ein Tablet oder ein Personal Digital Assistant (PDA) oder ein Laptop oder ein Computer oder ein tragbares Gerät ist.

5. Raumsteuerungssystem nach Anspruch 1, wobei die erste und die zweite Kamera eine Videokamera oder eine analoge Kamera oder eine digitale Videokamera oder eine Farbkamera oder eine Monochromkamera oder ein Camcorder oder eine PC-Kamera oder eine Webcam oder ein CCTV-Gerät ist.

6. Raumsteuerungssystem nach Anspruch 5, wobei die Kameras einen Tiefensensor und/oder einen RGB-Sensor umfassen.

7. Nichtflüchtiges computerlesbares Medium, das computerausführbare Befehle umfasst, um ein Ereignis und/oder eine Aktivität und/oder einen Status einer Umgebung zu überwachen, wobei die Befehle eine Maschine dazu veranlassen:
mindestens einen Strahl mit elektronischer Bildinformation zu modulieren, basierend auf dem Ereignis und/oder der Aktivität und/oder dem Zustand der Umgebung;
den mindestens einen Strahl mit der elektronischen Bildinformation in ein Visualisierungsbild anzuzeigen, eine von einer Person (106, 206, 408) innerhalb eines interaktiven Bereichs gerenderte Geste als eine Eingabe zu erfassen, **dadurch gekennzeichnet, dass** die Maschine ferner veranlasst wird:
eine der Gesteneingabe zugeordnete Information als mindestens eine Steuerinformation zum Bestimmen eines Blickwinkels zu übertragen,
eine Visualisierungskoordinate zu definieren, eine Bewegungsrichtung der Geste zu bestimmen,
die Gesteneingabe auf eine Veränderung der Visualisierungskoordinate zu mappen, und
ein Bild basierend auf dem bestimmten Blickwinkel anzuzeigen,
wobei die Befehle zum Anzeigen ferner umfassen:
Verfolgen einer Veränderung der biometrischen Position einer Person; und
Anzeigen eines dynamischen Blickwinkels, der der Veränderung der biometrischen Position der Person zugeordnet ist.

8. Nichtflüchtiges computerlesbares Medium nach Anspruch 7, wobei die Befehle zum Anzeigen des Visualisierungsbildes eine Wetterinformation und/oder eine Zeit- und Dateninformation und/oder Nutzung von Versorgungseinrichtungen und deren Kosten und/oder eine Verkehrsinformation und/oder eine Information über E-Mail-Nachrichten und/oder eine Information über Besprechungspläne und/oder eine Information über eingehende Anrufe und/oder eine Kontaktlisteninformation umfassen.

## Revendications

1. Système de commande de salle (100, 200, 300, 400) comprenant :
une interface utilisateur (110, 210, 404) pour afficher au moins un élément parmi un événement, une activité ou
un état d'un environnement ;
une caméra (102, 202, 302) pour surveiller au moins un élément parmi l'événement, l'activité ou l'état d'un l'environnement, la caméra (102, 202, 302) est configurée pour :
capturer un geste rendu par une personne (106, 206, 408) dans une zone interactive en tant qu'entrée ; et
transmettre des informations associées à l'entrée du geste ;
**caractérisé en ce que** :
les informations représentent au moins des informations de commande permettant de déterminer un angle de vue,
dans lequel le système de commande de salle (100, 200, 300, 400) comprend en outre une seconde caméra configurée pour suivre un changement dans la position biométrique d'une personne et l'interface utilisateur est configurée pour afficher un angle de vue dynamique associé au changement de la position biométrique de la personne,
dans lequel le système de commande de salle (100, 200, 300, 400) comprend en outre un module de coordonnées configuré pour définir une coordonnée de visualisation, et
dans lequel le système de commande de salle (100, 200, 300, 400) est configuré pour déterminer
une direction de déplacement du geste, la mise en correspondance de l'entrée du geste avec un changement de la coordonnée de visualisation, et l'affichage d'une image à travers une interface utilisateur graphique (110, 210, 404) sur la base de l'angle de vue déterminé.

2. Système de commande de salle selon la revendication 1, dans lequel la surface utilisateur est adaptée pour commander un dispositif externe.

3. Système de commande de salle selon la revendication 2, dans lequel le dispositif externe est un élément parmi un appareil électroménager, un système de divertissement, un dispositif de jeu, un HVAC, un système d'éclairage, un dispositif client et un dispositif vidéo.

4. Système de commande de salle selon la revendication 3, dans lequel le dispositif client est un élément parmi un phablet, un téléphone cellulaire, une tablette, un assistant numérique personnel, PDA, un ordinateur portable, un ordinateur et un dispositif portable.

5. Système de commande de salle selon la revendication 1, dans lequel les première et seconde caméras sont un élément parmi une caméra vidéo, une caméra analogique, une caméra vidéo numérique, une caméra en couleur, une caméra monochrome, un caméscope, une caméra de PC, une webcam et une CCTV.

6. Système de commande de salle selon la revendication 5, dans lequel la caméra comprend au moins un capteur parmi un capteur de profondeur ou un capteur RGB.

7. Support lisible par ordinateur non transitoire comprenant des instructions exécutables par ordinateur pour surveiller au moins un élément parmi un événement, une activité ou un état d'un environnement, les instructions amenant une machine à :
moduler au moins un faisceau avec les informations d'image électronique sur la base de l'au moins un élément parmi l'événement, l'activité ou l'état de l'environnement ;
afficher l'au moins un faisceau avec les informations d'image électronique dans une image de visualisation,
capturer un geste rendu par une personne (106, 206, 408) dans une zone interactive en tant qu'entrée, **caractérisé en ce qu'**elles amènent en outre la machine à :
transmettre des informations associées à l'entrée de geste en tant qu'au moins une information de commande permettant de déterminer un angle de vue,
définir une coordonnée de visualisation, déterminer une direction de déplacement du geste, mettre en correspondance l'entrée du geste avec un changement de la coordonnée de visualisation, et
afficher une image sur la base de l'angle de vue déterminé,
dans lequel les instructions d'affichage comprennent en outre :
le suivi d'un changement dans une position biométrique d'une personne ; et
l'affichage d'un angle de vue dynamique associé au changement de la position biométrique de la personne.

8. Support lisible par ordinateur non transitoire selon la revendication 7, dans lequel les instructions d'affichage de l'image de visualisation comprennent au moins un élément parmi des informations météorologiques, des informations de données et de temps, un usage utilitaire et des coûts, des informations de trafic, des informations de messages de messagerie électronique, des informations de planification de rendez-vous, des informations d'appels entrants et des informations de liste de contacts.
